# EUROPEAN PATENT APPLICATION

(11) **EP 4 125 044 A2**
(43) Date of publication of application: **01.02.2023**
(21) Application number: 22186684.1
(22) Date of filing: 25.07.2022
(51) Int. Cl.: G06T 15/20, G06T 19/00

(54) **IMAGE PROCESSING APPARATUS, IMAGE PROCESSING METHOD, AND PROGRAM**

(30) Priority: 28.07.2021 JP 2021123565
(71) Applicant: Canon Kabushiki Kaisha, Ohta-ku Tokyo 146-8501 (JP)
(72) Inventor: Ogasawara, Taku, Tokyo (JP)
(74) Representative: WESER & Kollegen Patentanwälte PartmbB

(57) **Abstract**

An image processing apparatus obtains (S608) input of additional information to a two-dimensional virtual viewpoint image based on a virtual viewpoint and a three-dimensional virtual space, converts (S609) the input additional information into an object arranged at a three-dimensional position in the virtual space, and displays (S611), on display means, the virtual viewpoint image based on the virtual space in which the object is arranged at the three-dimensional position.

## Description

### BACKGROUND OF THE INVENTION

### Field of the Invention

The present invention relates to a technique of sophisticating an operation of a virtual viewpoint image.

### Description of the Related Art

In an application for executing presentation, there is known a function of, during display of an image, accepting input of a marker having a circular or linear shape to indicate a point of interest in the image, combining a page image with the marker, and outputting these. In Japanese Patent Laid-Open No. 2017-151491, a technique that applies the function to a remote conference system is described.

In recent years, a technique of generating, from a plurality of images obtained by image capturing using a plurality of image capturing devices, an image (virtual viewpoint image) in which a captured scene is viewed from an arbitrary viewpoint has received a great deal of attention. Even in such a virtual viewpoint image, it is assumed that a marker is added to a target to be focused in a scene. If a marker is input to the virtual viewpoint image, the marker is displayed at an appropriate position when viewed from a viewpoint upon inputting the marker. However, if the viewpoint is switched to another viewpoint, the marker may be displayed at an unintended position. As described above, when rendering additional information such as a marker for a virtual viewpoint image, the rendered additional information may be displayed at an unintended position.

### SUMMARY OF THE INVENTION

The present invention provides a technique for displaying additional information rendered for a virtual viewpoint image at an appropriate position independently of a viewpoint.

The present invention in its first aspect provides an image processing apparatus as specified in claims 1 to 13.

The present invention in its second aspect provides an image processing method as specified in claim 14.

The present invention in its third aspect provides a program as specified in claim 15.

Further features of the present disclosure will become apparent from the following description of exemplary embodiments with reference to the attached drawings.

### BRIEF DESCRIPTION OF THE DRAWINGS

Figs. 1A and 1B are views showing an example of the configuration of an image processing system;
Figs. 2A and 2B are views showing an example of the configuration of an image processing apparatus;
Figs. 3A to 3D are views for explaining a virtual viewpoint;
Figs. 4A and 4B are views showing an example of the configuration of an operation screen;
Figs. 5A to 5E are views for explaining a marker object and a plane of interest;
Fig. 6 is a flowchart showing an example of the procedure of processing executed by the image processing apparatus;
Figs. 7A to 7D are views showing an example of displayed screens;
Fig. 8 is a view showing an example of the configuration of an image processing system;
Figs. 9A to 9D are views showing an example of the data configuration of a marker object;
Figs. 10A to 10C are views showing an example of displayed screens; and
Figs. 11A to 11C are views showing an example of displayed screens.

### DESCRIPTION OF THE EMBODIMENTS

Hereinafter, embodiments will be described in detail with reference to the attached drawings. Note, the following embodiments are not intended to limit the scope of the claimed disclosure. Multiple features are described in the embodiments, but limitation is not made a disclosure that requires all such features, and multiple such features may be combined as appropriate. Furthermore, in the attached drawings, the same reference numerals are given to the same or similar configurations, and redundant description thereof is omitted.

### (System Configuration)

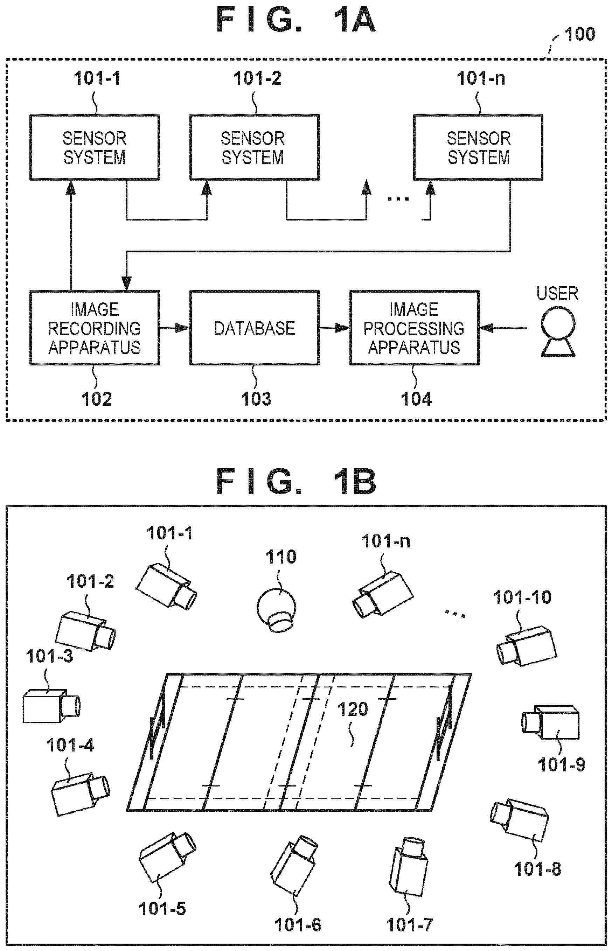

An example of the configuration of an image processing system 100 according to this embodiment will be described with reference to Figs. 1A and IB. The image processing system 100 includes a plurality of sensor systems (sensor systems 101-1 to 101-n in the example shown in Fig. 1A). Each sensor system includes at least one image capturing device (for example, a camera). Note that the sensor systems 101-1 to 101-n will generally be referred to as a "sensor system 101" hereinafter if there is no need to particularly make a distinction. In the image processing system 100, virtual viewpoint image data is generated based on image data obtained by the plurality of sensor systems 101 and provided to a user.

Fig. 1B shows an example of installation of the sensor systems 101. The plurality of sensor systems 101 are installed to surround a region (to be referred to as a captured object region 120 hereinafter) that is the object of image capturing, and capture the captured object region 120 from different directions. For example, if the captured object region 120 is defined as the field of a stadium where a football or rugby game is played, the n (for example, as many as 100) sensor systems 101 are installed to surround the field. Note that the number of installed sensor systems 101 is not particularly limited, and at least multiple sensor systems are installed. Note that the sensor systems 101 need not always be installed on the whole circumference of the captured object region 120, and may be installed on a part of the circumference of the captured object region 120 due to, for example, restrictions of the installation place. Also, image capturing devices included in each of the plurality of sensor systems 101 may include image capturing devices of different functions such as a telephotographic camera and a wide-angle camera.

In addition, the sensor system 101 may include a sound collection device (microphone) in addition to the image capturing device (camera). Sound collection devices in the plurality of sensor systems 101 synchronously collect sounds. Based on sound data collected by the plurality of sound collection devices, the image processing system 100 generates virtual listening point sound data to be reproduced together with the virtual viewpoint image and provides them to the user. Note that the image and the sound are processed together, although a description of the sound will be omitted for the sake of simplicity.

Note that the captured object region 120 may be defined to include not only the field of the stadium but also, for example, the stands of the stadium. The captured object region 120 may be defined as an indoor studio or stage. That is, the region of a captured object as a target to generate a virtual viewpoint image can be defined as the captured object region 120. Note that "captured object" here may be the region itself defined by the captured object region 120 or may include, in addition to or in place of that, all captured objects existing in the region, for example, a ball and persons such as players and referees. Also, the virtual viewpoint image is a moving image throughout the embodiment, but may be a still image.

The plurality of sensor systems 101 arranged as shown in Fig. 1B synchronously capture the common captured object region 120 using the image capturing devices provided in the sensor systems 101. In this embodiment, an image included in a plurality of images obtained by synchronously capturing the common captured object region 120 from a plurality of viewpoints will be referred to as a "multi-viewpoint image". Note that the multi-viewpoint image in this embodiment can be the captured image itself, but may be, for example, an image that has undergone image processing such as processing of extracting a predetermined region from the captured image.

Also, the image processing system 100 further includes an image recording apparatus 102, a database 103, and an image processing apparatus 104. The image recording apparatus 102 collects multi-viewpoint images obtained by image capturing of the plurality of sensor systems 101, and stores the multi-viewpoint images in the database 103 together with a timecode used in the image capturing. Here, the timecode is information used to uniquely identify the time of image capturing. For example, the timecode can be information that designates the image capturing time in a form such as
day:hour:minute: second.frame number.

The image processing apparatus 104 obtains a plurality of multi-viewpoint images corresponding to a common timecode from the database 103, and generates the three-dimensional model of the captured object from the obtained multi-viewpoint images. The three-dimensional model is configured to include, for example, shape information such as a point group expressing the shape of the captured object or planes or vertices defined when the shape of the captured object is expressed as a set of polygons, and texture information expressing colors and texture on the surface of the shape. Note that this is merely an example, and the three-dimensional model can be defined in an arbitrary format that three-dimensionally expresses the captured object. Based on, for example, a virtual viewpoint designated by the user, the image processing apparatus 104 generates a virtual viewpoint image corresponding to the virtual viewpoint using the three-dimensional model of the captured object and outputs the virtual viewpoint image. For example, as shown in Fig. 1B, a virtual viewpoint 110 is designated based on the position of the viewpoint and the line-of-sight direction in a virtual space associated with the captured object region 120. The user changes the line-of-sight direction by moving the virtual viewpoint in the virtual space, thereby browsing a captured object generated based on the three-dimensional model of the captured object existing in the virtual space, for example, from a viewpoint different from any of the image capturing devices of the plurality of sensor systems 101. Note that since the virtual viewpoint can freely move in the three-dimensional virtual space, the virtual viewpoint image can also be called a "free viewpoint image".

The image processing apparatus 104 generates the virtual viewpoint image as an image representing a scene observed from the virtual viewpoint 110. Note that the image generated here is a two-dimensional image. The image processing apparatus 104 is, for example, a computer used by the user, and is configured to include a display device such as a touch panel display or a liquid crystal display. Also, the image processing apparatus 104 may have a display control function for displaying an image on an external display device. The image processing apparatus 104 displays the virtual viewpoint image on, for example, the screens of these display devices. That is, the image processing apparatus 104 executes processing for generating an image of a scene within a range visible from the virtual viewpoint as a virtual viewpoint image and displaying it on a screen.

Note that the image processing system 100 may have a configuration different from that shown in Fig. 1A. For example, a configuration including an operation/display device such as a touch panel display separately from the image processing apparatus 104 may be used. For example, a configuration in which an operation of a virtual viewpoint or the like is performed on a tablet or the like including a touch panel display, a virtual viewpoint image is generated in the image processing apparatus 104 in response to this, and the image is displayed on the tablet may be used. Note that a configuration in which a plurality of tablets are connected to the image processing apparatus 104 via a server, and the image processing apparatus 104 outputs the virtual viewpoint image to each of the plurality of tablets may be used. Also, the database 103 and the image processing apparatus 104 may be integrated. Also, a configuration in which processing up to generation of the three-dimensional model of the captured object from multi-viewpoint images is performed in the image recording apparatus 102, and the three-dimensional model of the captured object is stored in the database 103 may be used. In this case, the image processing apparatus 104 reads out the three-dimensional model from the database 103 and generates the virtual viewpoint image. Fig. 1A shows an example in which the plurality of sensor systems 101 are daisy-chained. For example, the sensor systems 101 may directly be connected to the image recording apparatus 102, or may be connected in another connection form. Note that to allow the sensor systems 101 to synchronously perform image capturing, for example, the image recording apparatus 102 or another apparatus for time synchronization may notify each of the sensor systems 101 of reference time information.

In this embodiment, the image processing apparatus 104 further accepts, from the user, input of a marker such as a circle or a line to the virtual viewpoint image displayed on the screen, and displays the marker superimposed on the virtual viewpoint image. If such a marker is input, the marker is appropriately displayed at the virtual viewpoint where the marker is input. However, when the position or direction of the virtual viewpoint is changed, the marker may be deviated from the object to which the marker is added, resulting in unintended display. Hence, in this embodiment, the image processing apparatus 104 executes processing for displaying the marker accepted on the displayed two-dimensional screen at an appropriate position regardless of the movement of the virtual viewpoint. The image processing apparatus 104 converts the two-dimensional marker into a three-dimensional marker object. The image processing apparatus 104 combines the three-dimensional model of the captured object and the three-dimensional marker object, thereby generating a virtual viewpoint image in which the position of the marker is appropriately adjusted in accordance with the movement of the virtual viewpoint. The configuration of the image processing apparatus 104 that executes this processing and an example of the procedure of the processing will be described below.

### (Configuration of Image Processing Apparatus)

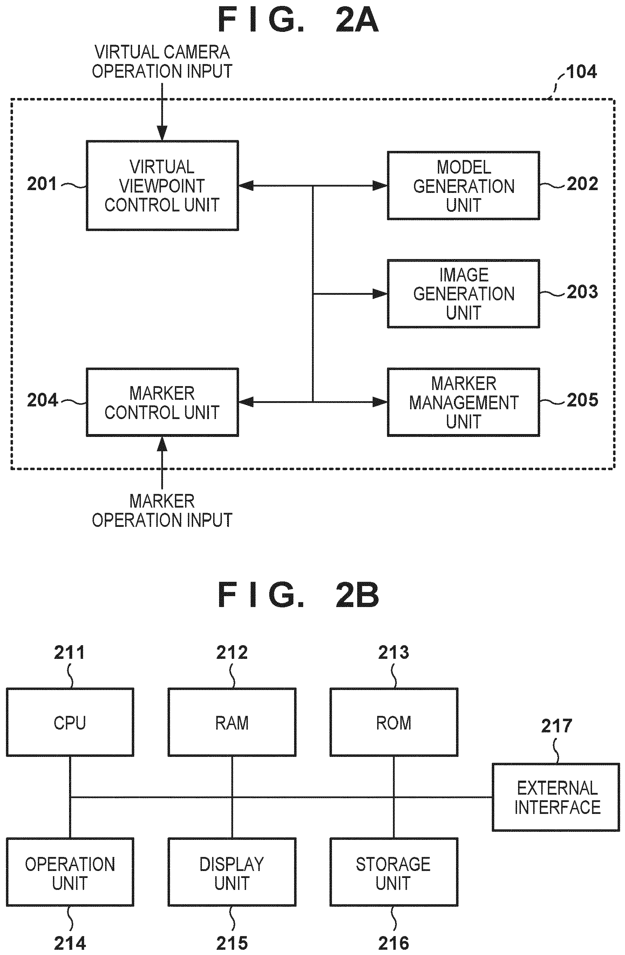

The configuration of the image processing apparatus 104 will be described next with reference to Figs. 2A and 2B. Fig. 2A shows an example of the functional configuration of the image processing apparatus 104. The image processing apparatus 104 includes, as its functional configuration, for example, a virtual viewpoint control unit 201, a model generation unit 202, an image generation unit 203, a marker control unit 204, and a marker management unit 205. Note that these are merely examples. At least some of the shown functions may be omitted, and other functions may be added. All functions shown in Fig. 2A may be replaced with other functional blocks if functions to be described later can be executed. Also, two or more functional blocks shown in Fig. 2A may be integrated into one functional block, or one functional block may be divided into a plurality of functional blocks.

The virtual viewpoint control unit 201 accepts a user operation concerning the virtual viewpoint 110 or a timecode and controls an operation of the virtual viewpoint. A touch panel, a joystick, or the like is used for the user operation of the virtual viewpoint. However, the present invention is not limited to these, and the user operation can be accepted by an arbitrary device. The model generation unit 202 obtains, from the database 103, multi-viewpoint images corresponding to a timecode designated by the user operation or the like, and generates a three-dimensional model representing the three-dimensional shape of a captured object included in the captured object region 120. For example, the model generation unit 202 obtains, from the multi-viewpoint images, a foreground image that extracts a foreground region corresponding to a captured object such as a person or a ball, and a background image that extracts a background region other than the foreground region. The model generation unit 202 generates a three-dimensional model of the foreground based on a plurality of foreground images. The three-dimensional model is formed by, for example, a point group generated by a shape estimation method such as Visual Hull. Note that the format of three-dimensional shape data representing the shape of an object is not limited to this, and a mesh or three-dimensional data of a unique format may be used. Note that the model generation unit 202 can generate a three-dimensional model of the background in a similar manner. As for the three-dimensional model of the background, a three-dimensional model generated in advance by an external apparatus may be obtained. Hereinafter, for the descriptive convenience, the three-dimensional model of the foreground and the three-dimensional model of the background will be referred to as "the three-dimensional model of the captured object" or simply "the three-dimensional model" altogether.

Based on the three-dimensional model of the captured object and the virtual viewpoint, the image generation unit 203 generates a virtual viewpoint image that reproduces a scene viewed from the virtual viewpoint. For example, the image generation unit 203 obtains an appropriate pixel value from the multi-viewpoint images for each of points forming the three-dimensional model and performs coloring processing. Then, the image generation unit 203 arranges the three-dimensional model in a three-dimensional virtual space, and projects and renders it to the virtual viewpoint together with the pixel values, thereby generating a virtual viewpoint image. Note that the virtual viewpoint image generation method is not limited to this, and another method such as a method of generating a virtual viewpoint image by projection conversion of a captured image without using a three-dimensional model may be used.

The marker control unit 204 accepts, from the user, input of a marker such as a circle or a line to the virtual viewpoint image. The marker control unit 204 converts the marker input performed for the two-dimensional virtual viewpoint image into a marker object that is three-dimensional data on the virtual space. The marker control unit 204 transmits an instruction to the image generation unit 203 such that a virtual viewpoint image combining the marker object and the three-dimensional model of the captured object is generated in accordance with the position/posture of the virtual viewpoint. Note that the marker control unit 204 provides, for example, the marker object as a three-dimensional model to the image generation unit 203, and the image generation unit 203 handles the marker object like the captured object, thereby generating a virtual viewpoint image. Based on the marker object provided from the marker control unit 204, The image generation unit 203 may execute processing for superimposing the marker object separately from the processing of generating the virtual viewpoint image. The marker control unit 204 may execute processing for superimposing a marker based on the marker object on the virtual viewpoint image provided by the image generation unit 203. The marker management unit 205 performs storage control to store the marker object of the three-dimensional model converted by the marker control unit 204 in, for example, a storage unit 216 or the like to be described later. The marker management unit 205 performs storage control such that the marker object is stored in association with, for example, a timecode. Note that the model generation unit 202 may calculate the coordinates of each object such as a person or a ball on the foreground, accumulate the coordinates in the database 103, and use the coordinates of each object to designate the coordinates of the marker object.

Fig. 2B shows an example of the hardware configuration of the image processing apparatus 104. The image processing apparatus 104 includes, as its hardware configuration, for example, a CPU 211, a RAM 212, a ROM 213, an operation unit 214, a display unit 215, the storage unit 216, and an external interface 217. Note that CPU is short for Central Processing Unit, RAM is short for Random Access Memory, and ROM is short for Read Only Memory.

The CPU 211 executes control of the entire image processing apparatus 104 or processing to be described later using programs and data stored in, for example, the RAM 212 or the ROM 213. When the CPU 211 executes the programs stored in the RAM 212 or the ROM 213, the functional blocks shown in Fig. 2A can be implemented. Note that the image processing apparatus 104 may include dedicated hardware such as one or more processors other than the CPU 211 and cause the hardware to execute at least part of processing by the CPU 211. The dedicated hardware can be, for example, an MPU (Micro Processing Unit), an ASIC (Application Specific Integrated Circuit), an FPGA (Field Programmable Gate Array), or a DSP (Digital Signal Processor). The ROM 213 holds programs and data used to execute processing for a virtual viewpoint image or a marker. The RAM 212 provides a work area to temporarily store programs and data read out from the ROM 213 and used by the CPU 211 to execute each process.

The operation unit 214 is configured to include devices, for example, a touch panel and buttons used to accept an operation by the user. The operation unit 214 obtains, for example, information representing an operation on a virtual viewpoint or a marker by the user. Note that the operation unit 214 may be connected to an external controller and accept input information from the user concerning an operation. The external controller is not particularly limited, and is, for example, a triaxial controller such as a joystick, or a keyboard or a mouse. The display unit 215 is configured to include a display device such as a display. The display unit 215 displays, for example, a virtual viewpoint image generated by the CPU 211 and the like. Also, the display unit 215 may include various kinds of output devices capable of presenting information to the user, for example, a speaker for audio output and a device for vibration output. Note that the operation unit 214 and the display unit 215 may be integrally formed using, for example, a touch panel display.

The storage unit 216 is configured to include, for example, a mass storage device such as an SSD (Solid State Drive) or an HDD (Hard Disk Drive). Note that these are merely examples, and the storage unit 216 may be configured to include anther arbitrary storage device. The storage unit 216 records data to be processed by a program. The storage unit 216 stores, for example, a three-dimensional marker object obtained when a marker input accepted via the operation unit 214 is converted by the CPU 211. The storage unit 216 may further store other pieces of information. The external interface 217 is configured to include, for example, an interface device connected to a network such as a LAN (Local Area Network). Information is transmitted/received to/from an external apparatus such as the database 103 via the external interface 217. In addition, the external interface 217 may be configured to include an image output port such as HDMI^{®} or an SDI. Note that HDMI is short for High-Definition Multimedia Interface, and SDI is short for Serial Digital Interface. In this case, information can be transmitted to an external display device or projection apparatus via the external interface 217. Also, the image processing apparatus may be connected to a network using the external interface 217 to receive operation information of a virtual viewpoint or a marker or transmit a virtual viewpoint image via the network.

### (Virtual Viewpoint and Line-Of-Sight Direction)

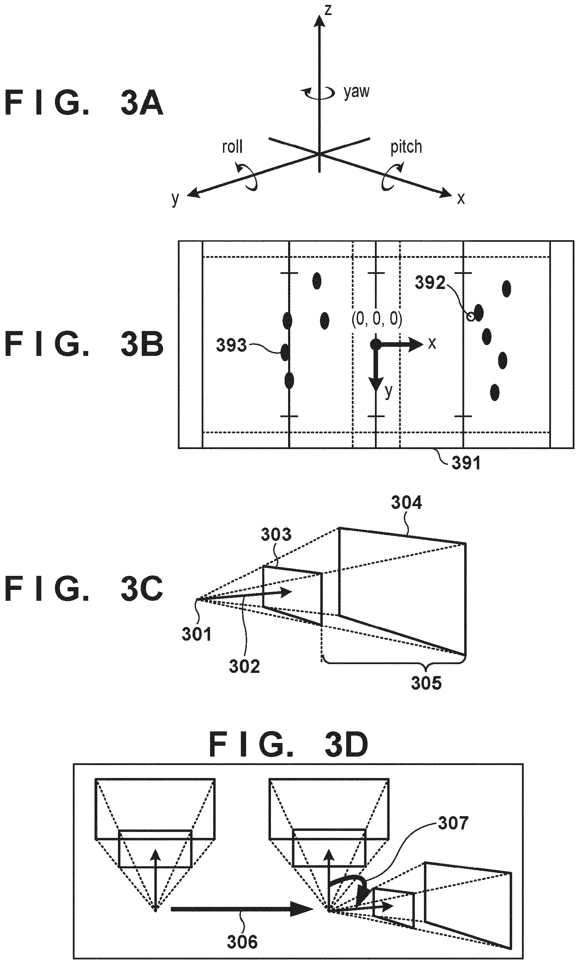

The virtual viewpoint 110 will be described next with reference to Figs. 3A to 3D. The virtual viewpoint 110 and its operation are designed using one coordinate system. In this embodiment, as the coordinate system, an orthogonal coordinate system in a general three-dimensional space formed by X-, Y-, and Z-axes as shown in Fig. 3A is used. Note that this is merely an example, and an arbitrary coordinate system capable of indicating a position in a three-dimensional space may be used. The coordinates of a captured object are set and used using the coordinate system. Captured objects include, for example, the field of a stadium or a studio, and a person and an object such as a ball existing in the space of the field or studio. For example, in an example shown in Fig. 3B, a whole field 391 of a stadium, and a ball 392 and players 393 existing on that are included as the captured objects. Note that stands and the like around the field may be included in the captured objects. In the example shown in Fig. 3B, the coordinates of the center of the field 391 are set as the origin (0, 0, 0), the X-axis is set in the longitudinal direction of the field 391, the Y-axis is set in the widthwise direction of the field 391, and the Z-axis is set in the vertical direction with respect to the field. When the coordinates of each captured object are set with respect to the center of the field 391, a three-dimensional model generated from a captured object can be arranged in a three-dimensional virtual space. Note that the coordinate setting method is not limited to this.

A virtual viewpoint will be described next with reference to Figs. 3C and 3D. The virtual viewpoint defines a viewpoint and a line-of-sight direction to generate a virtual viewpoint image. Referring to Fig. 3C, the vertex of a square pyramid represents a position 301 of the virtual viewpoint, and a vector extending from the vertex represents a line-of-sight direction 302. The position 301 of the virtual viewpoint is expressed by coordinates (x, y, z) on the three-dimensional virtual space. The line-of-sight direction 302 is expressed by a unit vector including the components of the axes as scalars, and is also called the optical axis vector of the virtual viewpoint. The line-of-sight direction 302 passes through the center of each of a front clip plane 303 and a rear clip plane 304. Note that the clip planes are planes that define a region as a rendering target. A space 305 sandwiched between the front clip plane 303 and the rear clip plane 304 is called a view frustum of the virtual viewpoint, and a virtual viewpoint image is generated in this range (or a virtual viewpoint image is projected and displayed in this range). Note that a focal distance (not shown) can be set to an arbitrary value. Like a general camera, when the focal distance is changed, the angle of view is changed. That is, when the focal distance is made short, the angle of view can be widened, and the view frustum can be widened. On the other hand, when the focal distance is made long, the angle of view becomes narrow, and the view frustum can be narrowed to capture a captured object large. Note that the focal distance is merely an example, and an arbitrary parameter capable of setting the position or size of the view frustum can be used.

The position of the virtual viewpoint and the line-of-sight direction from the virtual viewpoint can be moved and rotated in the virtual space expressed by three-dimensional coordinates. As shown in Fig. 3D, movement 306 of the virtual viewpoint is movement of the position 301 of the virtual viewpoint and is expressed by the components (x, y, z) of the axes. Rotation 307 of the virtual viewpoint is expressed by Yaw that is rotation about the Z-axis, Pitch that is rotation about the X-axis, and Roll that is rotation about the Y-axis, as shown in Fig. 3A. By these, the position of the virtual viewpoint and the line-of-sight direction from the virtual viewpoint can freely be moved and rotated in the three-dimensional virtual space, and the image processing apparatus 104 can reproduce, as a virtual viewpoint image, an image in a case where it is assumed that an arbitrary region of a captured object is observed from an arbitrary angle. Note that hereinafter, the position of the virtual viewpoint and the line-of-sight direction from the virtual viewpoint will be referred to as a "virtual viewpoint" together if there is no need to particularly make a distinction.

### (Operation Method for Virtual Viewpoint and Marker)

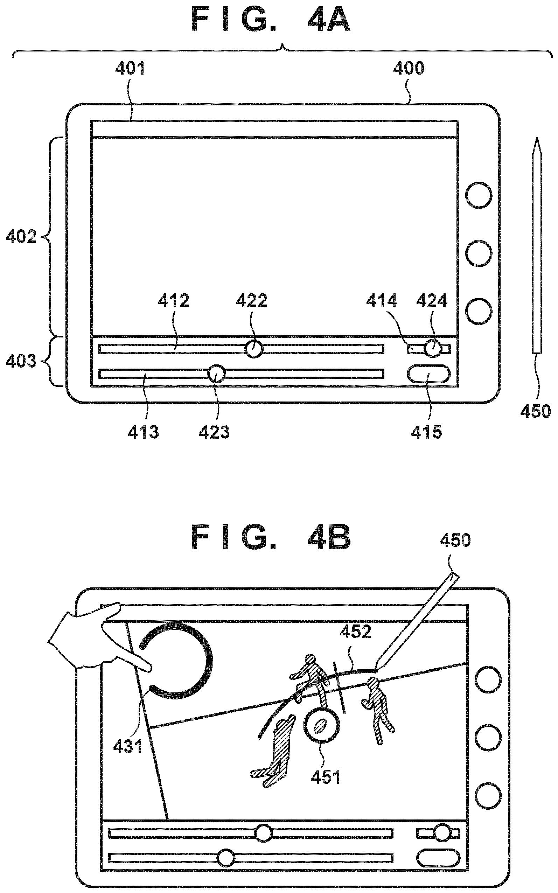

An operation method for a virtual viewpoint and a marker will be described with reference to Figs. 4A and 4B. Fig. 4A is a view for explaining a screen displayed by the image processing apparatus 104. A case where a tablet type terminal 400 including a touch panel display is used will be described here. Note that the terminal 400 need not be a tablet type terminal, and an arbitrary information processing apparatus of another type can be used as the terminal 400. If the terminal 400 is the image processing apparatus 104, the terminal 400 is configured to generate and display a virtual viewpoint image and also accept operations such as designations of a virtual viewpoint and a timecode, and a marker input. On the other hand, if the terminal 400 is an apparatus connected to the image processing apparatus 104 via a communication network, the terminal 400 transmits information representing a virtual viewpoint or a timecode to the image processing apparatus 104 and receives a provided virtual viewpoint image. Also, the terminal 400 accepts a marker input operation for a virtual viewpoint image and transmits information representing the accepted marker input to the image processing apparatus 104.

Referring to Fig. 4A, a display screen 401 on the terminal 400 is roughly classified into two regions including a virtual viewpoint operation region 402 and a timecode operation region 403.

In the virtual viewpoint operation region 402, a user operation concerning a virtual viewpoint is accepted, In the virtual viewpoint operation region 402, and a virtual viewpoint image is displayed in the range of the region. That is, in the virtual viewpoint operation region 402, a virtual viewpoint is operated, and a virtual viewpoint image that reproduces a scene assumed to be observed from the virtual viewpoint after the operation is displayed. Also, in the virtual viewpoint operation region 402, a marker input for the virtual viewpoint image is accepted. Note that although the operation of the marker and the operation of the virtual viewpoint may be executed together, it is assumed in this embodiment that the operation of the marker is accepted independently of the operation of the virtual viewpoint. In an example, like an example shown in Fig. 4B, the virtual viewpoint can be operated by a touch operation such as tap and drag using a finger of the user on the terminal 400, and the marker operation can be performed by tap and drag using a rendering device such as a pencil 450. The user moves or rotates the virtual viewpoint by a drag operation 431 using, for example, a finger. Also, the user renders a marker 451 or a marker 452 on the virtual viewpoint image by a drag operation using the pencil 450. The terminal 400 renders a marker on the continuous coordinates of the drag operation by the pencil 450. Note that the operation by the finger may be assigned to the marker operation, and the operation by the pencil may be assigned to the operation of the virtual viewpoint. In addition, if the terminal 400 can make a distinction between the operation of the virtual viewpoint and the marker operation, another arbitrary operation method may be used. According to this configuration, the user can easily selectively use the operation of the virtual viewpoint and the marker operation.

Note that when independently executing the operation of the virtual viewpoint and the operation of the marker, a rendering device such as the pencil 450 need not always be used. For example, an ON/OFF button (not shown) for the marker operation may be provided on the touch panel, and whether to perform the marker operation may be switched by the button operation. For example, to perform the marker operation, the button is turned on. During the ON state of the button, the virtual viewpoint operation may be inhibited. Also, to perform the operation of the virtual viewpoint, the button is turned off. During the OFF state of the button, the marker operation may be inhibited.

The timecode operation region 403 is used to designate the timing of a virtual viewpoint image to be viewed. The timecode operation region 403 includes, for example, a main slider 412, a sub slider 413, a speed designation slider 414, and a cancel button 415. The main slider 412 is used to accept an arbitrary timecode selected by the user's drag operation of the position of a knob 422, or the like. The whole period in which the virtual viewpoint image can be reproduced is represented by the range of the main slider 412. The sub slider 413 enlarges and displays a part of the timecode and allows the user to perform a detailed operation on, for example, a frame basis. The sub slider 413 is used to accept user selection of an arbitrary detailed timecode by a drag operation of the position of a knob 423, or the like.

On the terminal 400, an approximate designation of the timecode is accepted by the main slider 412, and a detailed designation of the timecode is accepted by the sub slider 413. For example, the main slider 412 and the sub slider 413 can be set such that the main slider 412 corresponds to a range of 3 hrs corresponding to the entire length of a game, and the sub slider 413 corresponds to a time range of about 30 sec as a part of the length. For example, a section of 15 sec before and after the timecode designated by the main slider 412 or a section of 30 sec from the timecode can be expressed by the sub slider 413. Also, the time may be divided into sections on a 30-sec basis in advance, and of the sections, a section including the timecode designated by the main slider 412 may be expressed by the sub slider 413. As described above, the time scales of the main slider 412 and the sub slider 413 are different. Note that the above-described time lengths are merely examples, and the sliders may be configured to correspond to other time lengths. Note that a user interface capable of changing the setting of the time length to which, for example, the sub slider 413 corresponds may be prepared. Also, although Fig. 4A shows an example in which the main slider 412 and the sub slider 413 are displayed in the same length on the screen, the lengths may be different from each other. That is, the main slider 412 may be longer, or the sub slider 413 may be longer. Also, the sub slider 413 need not always be displayed. For example, the sub slider 413 may be displayed after a display instruction is accepted, or the sub slider 413 may be displayed when a specific operation such as pause is instructed. The designation and display of the timecode may be performed without using the knob 422 of the main slider 412 and the knob 423 of the sub slider 413. For example, the timecode may be designated and displayed by numerical values such as numerical values in a form such as day:hour:minute:second.frame number.

The speed designation slider 414 is used to accept a user's designation of a reproduction speed for 1x speed reproduction, slow reproduction, or the like. For example, the count-up interval of the timecode is controlled in accordance with a reproduction speed selected using a knob 424 of the speed designation slider 414. The cancel button 415 is used to cancel each operation concerning the timecode. In addition, the cancel button 415 may be used to clear pause and return to normal reproduction. Note that it is not limited to cancel if the button is configured to perform an operation concerning the timecode.

Using the screen configuration as described above, the user can cause the terminal 400 to display a virtual viewpoint image in a case where the three-dimensional model of a captured object an arbitrary timecode is viewed from an arbitrary position/posture by operating the virtual viewpoint and the timecode. The user can input a marker to the virtual viewpoint image independently of the operation of the virtual viewpoint.

### (Marker Object and Plane of Interest)

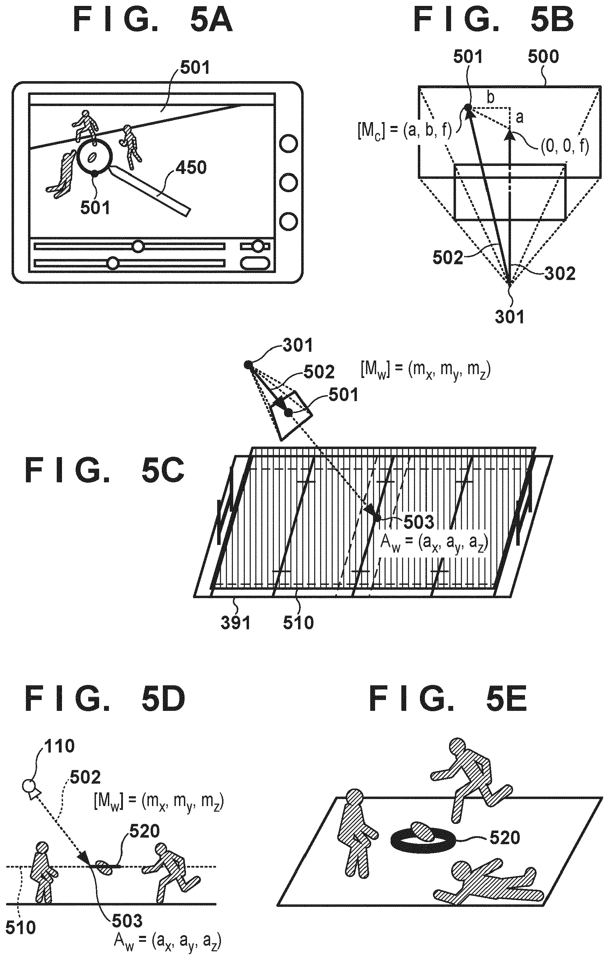

In this embodiment, a two-dimensional marker input by the user to a two-dimensionally displayed virtual viewpoint image is converted into a three-dimensional marker object. The three-dimensionally converted marker object is arranged in the same three-dimensional virtual space as the virtual viewpoint. The marker object conversion method will be described first with reference to Figs. 5A to 5E.

Fig. 5A shows a state in which a marker is input to a virtual viewpoint image 500 using the pencil 450. Here, a vector representing one point on the marker will be referred to as a marker input vector 501. Fig. 5B is a view schematically showing a virtual viewpoint designated when generating the virtual viewpoint image 500 displayed in Fig. 5A. Let [M_{c}] be the marker input vector 501 in Fig. 5A. The marker input vector 501 can be expressed as [M_{c}] = (a, b, f) using camera coordinates with respect to the position 301 of the virtual viewpoint as the origin. Here, "f" is the focal distance of the virtual viewpoint. In Fig. 5B, the intersection between the optical axis of the virtual camera and the focal plane of the virtual viewpoint is (0, 0, f), and the marker input vector [M_{c}] = (a, b, f) indicates a point moved from the intersection by a in the x direction and b in the y direction. Concerning the marker input vector, it is expressed as [M_{c}] on camera coordinates, and as [M_{w}] = (mₓ, m_{y}, m_{z}) on world coordinates. The world coordinates are coordinates in the virtual space. A marker input vector 502 ([M_{w}]) on the world coordinates is calculated by [M_{w}] = Qt·[M_{c}] using a quaternion Qt obtained from a rotation matrix representing the posture of the virtual camera. Note that the quaternion of the virtual camera is a general technical term and, a detailed description thereof will be omitted here.

In this embodiment, to convert the marker input to the two-dimensional virtual viewpoint image into the marker object of three-dimensional data, a plane 510 of interest as shown in Figs. 5C and 5D is used. Note that Fig. 5C is an overhead view of the entire plane 510 of interest, and Fig. 5D is a view viewed in a direction parallel to the plane 510 of interest. That is, Figs. 5C and 5D show states in which the same captured objects are viewed from different directions. The plane 510 of interest is, for example, a plane parallel to the field 391 (Z = 0), and is a plane located at a height (for example, Z = 1.5 m) easy for a viewer to place focus. The plane 510 of interest can be expressed by an equation such as z = Z_{fix}.

The marker object is generated as three-dimensional data in contact with the plane 510 of interest. For example, an intersection 503 between the marker input vector 502 and the plane 510 of interest is generated as a marker object corresponding to one point on the marker corresponding to the marker input vector 502. That is, conversion from a marker to a marker object is performed such that an intersection between a line passing through the virtual viewpoint and a point on the marker and a predetermined plane prepared as the plane 510 of interest becomes a point in the marker object corresponding to the point on the marker. Note that the intersection between the marker input vector 502 ([M_{w}] = (mₓ, m_{y}, m_{z})) and the plane 510 (z = z_{fix}) can be calculated by a general mathematical solution, and a detailed description thereof will be omitted. Here, this intersection is assumed to be obtained as intersection coordinate (A_{w} = (aₓ, a_{y}, a_{z})). Such intersection coordinates are calculated for each of continuous points obtained as the marker input, and three-dimensional data obtained by connecting the intersection coordinates is a marker object 520. That is, if the marker is input as a continuous line or curve, the marker object 520 is generated as a line or curve on the plane 510 of interest in correspondence with the continuous line or curve. Accordingly, the marker object 520 is generated as a three-dimensional object in contact with the plane of interest easy for the viewer to place focus. The plane of interest can be set based on the height of an object on which the viewer places focus, for example, based on the height where the ball mainly exists or the height of the center portion of a player. Note that the conversion from the marker to the marker object 520 may be done by calculating the intersection between the vector and the plane of interest, as described above, or the conversion from the marker to the marker object may be done by a predetermined matrix operation or the like. In addition, the marker object may be generated based on a table corresponding to the virtual viewpoint and the position where the marker is input. Note that regardless of the method to be used, processing can be performed such that the marker object is generated on the plane of interest.

In an example, when the above-described conversion is performed for a marker input as a two-dimensional circle on the tablet shown in Fig. 5A, the marker object 520 having a three-dimensional doughnut shape shown in Fig. 5E is generated. The marker object is created from continuous points, and is generated as three-dimensional data to which a predetermined height is added, as shown in Fig. 5E.

Note that in the example described with reference to Figs. 5A to 5E, the plane 510 of interest is a plane parallel to the X-Y plane that is the field. However, the present invention is not limited to this. For example, if the captured object is a sport such as bouldering that is performed in the vertical direction, the plane of interest may be set as a plane parallel to the X-Z plane or Y-Z plane. That is, an arbitrary plane that can be defined on the three-dimensional space can be used as the plane of interest. Note that the plane of interest is not limited to a flat plane and may be a curved plane. That is, even if a curved plane is used, its shape is not particularly limited if the intersection between the curved plane and the marker input vector can uniquely be calculated.

### (Procedure of Processing)

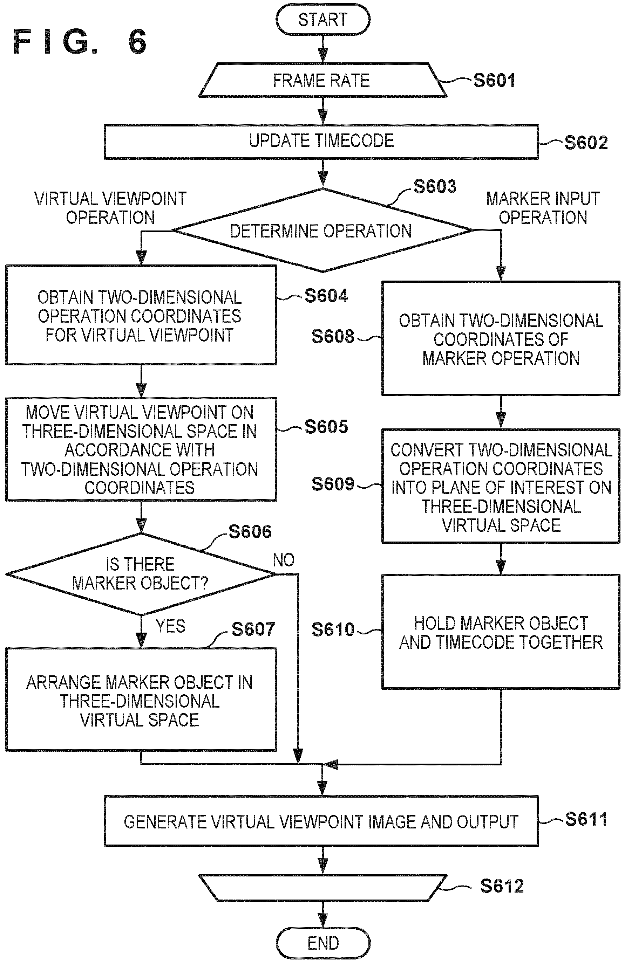

An example of the procedure of processing executed by the image processing apparatus 104 will be described next with reference to Fig. 6. This processing is formed by loop processing (step S601 and S612) in which the processes of steps S602 to S611 are repeated, and the loop is executed at a predetermined frame rate. For example, if the frame rate is 60 FPS, the processing of one loop (one frame) is executed at an interval of about 16.6 [ms]. As a result, in step S611 to be described later, a virtual viewpoint image is output at the frame rate. The frame rate can be set to synchronize with an updating rate in screen display of the image processing apparatus 104. However, the frame rate may be set in accordance with the frame rate of the image capturing device that captures the multi-viewpoint images or the frame rate of the three-dimensional model stored in the database 103. Note that in the following description, every time the processing of the loop is executed, the timecode is counted up by one frame. The count-up interval of the timecode may be changed in accordance with a user operation or the like. For example, if a reproduction speed of 1/2 is designated, frame count-up of the timecode can be performed once in two loop processes. Also, for example, if pause is designated, count-up of the timecode can be stopped.

In the loop processing, the image processing apparatus 104 updates the timecode of the processing target (step S602). The timecode here is expressed in a form of day:hour:minute:second.frame, as described above, and updating such as count-up is performed on a frame basis. The image processing apparatus 104 determines whether the accepted user operation is the virtual viewpoint operation or the marker input operation (step S603). Note that the types of operations are not limited to these. For example, if an operation for the timecode is accepted, the image processing apparatus 104 can return the process to step S602 and update the timecode. If no user operation is accepted, the image processing apparatus 104 can advance the process, assuming that a virtual viewpoint designation operation is performed in immediately preceding virtual viewpoint image generation processing. The image processing apparatus 104 may determine whether another operation is further accepted.

Upon determining in step S603 that the virtual viewpoint operation is accepted, the image processing apparatus 104 obtains two-dimensional operation coordinates for the virtual viewpoint (step S604). The two-dimensional operation coordinates here are, for example, coordinates representing the position where a tap operation for the touch panel is accepted. Based on the operation coordinates obtained in step S604, the image processing apparatus 104 performs at least one of movement and rotation of the virtual viewpoint on the three-dimensional virtual space (step S605). Movement/rotation of the virtual viewpoint has been described above concerning Fig. 3D, and a repetitive description thereof will be omitted here. Also, processing of deciding the amounts of movement and rotation of the virtual viewpoint on the three-dimensional space based on the two-dimensional coordinates obtained by the touch operation on the touch panel can be executed using a known technique, and a detailed description thereof will be omitted here. After the processes of steps S604 and S605 or concurrently with the processes, the image processing apparatus 104 determines whether a marker object exists in the range of a field of view determined by the virtual viewpoint after the movement/rotation (step S606). If a marker object exists in the range of the field of view determined by the virtual viewpoint after the movement/rotation (YES in step S606), the image processing apparatus 104 reads out the marker object and arranges it in the three-dimensional virtual space (step S607). After the marker object is arranged, the image processing apparatus 104 generates a virtual viewpoint image including the marker object and outputs the virtual viewpoint image (step S611). That is, in accordance with the virtual viewpoint, the image processing apparatus 104 generates a virtual viewpoint image using the three-dimensional model of the captured object corresponding to the timecode updated in step S602 and the marker object arranged in the virtual space. Note that if no marker object exists in the range of the field of view determined by the virtual viewpoint after the movement/rotation (NO in step S606), the image processing apparatus 104 generates a virtual viewpoint image without arranging the marker object and outputs the virtual viewpoint image (step S611).

Upon determining in step S603 that the marker input operation is accepted, the image processing apparatus 104 obtains the two-dimensional coordinates of the marker operation in the virtual viewpoint image (step S608). That is, the image processing apparatus 104 obtains the two-dimensional coordinates of the marker operation input to the virtual viewpoint operation region 402, as described concerning Fig. 4A. The image processing apparatus 104 then converts the two-dimensional coordinates of the marker input obtained in step S608 into a marker object that is three-dimensional data on the plane of interest on the virtual space (step S609). The method of conversion from the marker input to the marker object has been described above with reference to Figs. 5A to 5E, and a repetitive description thereof will be omitted here. When the marker object is obtained in step S609, the image processing apparatus 104 holds the marker object and the timecode together (step S610). In accordance with the virtual viewpoint, the image processing apparatus 104 generates a virtual viewpoint image using the three-dimensional model of the captured object corresponding to the timecode updated in step S602 and the marker object arranged in the virtual space (step S611).

According to the above-described processing, the marker input to the two-dimensional virtual viewpoint image can be converted into three-dimensional data using the plane of interest in the virtual space, and the three-dimensional model of the captured object and the marker object can be arranged in the same virtual space. For this reason, a virtual viewpoint image in which the positional relationship between the captured object and the marker is maintained can be generated regardless of the position/posture of the virtual viewpoint.

### (Examples of Screen Display)

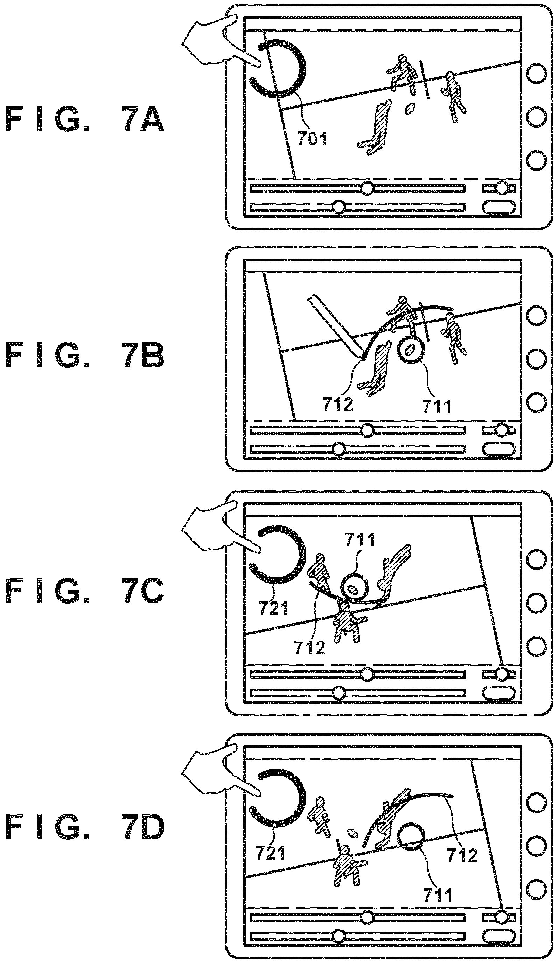

Examples of screen display in a case where the above-described processing is executed and in a case where the processing is not executed will be described with reference to Figs. 7A to 7D. Fig. 7A shows a state in which the image processing apparatus 104 displays a virtual viewpoint image before marker input. In this state, the user can arbitrarily move/rotate the virtual viewpoint by, for example, a touch operation 701. Here, as an example, the timecode is paused by a user operation, and marker input can be accepted in this state. Note that the marker input may correspond to the virtual viewpoint image during a predetermined period, and, for example, the marker input may be maintained in a predetermined number of frames from the frame where the operation is accepted. Also, for example, the input marker may be maintained until an explicit marker erase instruction is input by the user. Fig. 7B shows a state during acceptance of the marker operation by the user. An example is shown here, in which two marker inputs (a circle 711 and a curve 712) are accepted by a pencil. When such marker inputs are accepted, the image processing apparatus 104 converts the marker inputs into marker objects of three-dimensional models on the plane of interest, and renders the marker objects together with the virtual viewpoint image. Note that in a state in which the virtual viewpoint is not changed, display similar to a case where marker input by the user is done is performed, and the user recognizes this as a state in which a marker is simply input. Note that during execution of conversion processing to the marker object, the accepted two-dimensional marker input may directly be displayed, and when the conversion processing to the marker object is completed, re-rendering based on the three-dimensional marker object may be performed.

Fig. 7C shows an example in which after the input markers are converted into three-dimensional marker objects and rendered, movement/rotation of the virtual viewpoint is performed by a touch operation 721 of the user. According to the method of this embodiment, since the three-dimensional marker object is arranged near the three-dimensional position of the captured object with the marker, on which focus should be placed, in the virtual space, the marker is displayed near the captured object to be focused even after the movement/rotation of the virtual viewpoint is performed. In addition, since the marker is converted into the three-dimensional marker object and rendered in the virtual viewpoint image, the position and direction are changed in accordance with the movement/rotation of the virtual viewpoint and observed. As described above, according to the method of this embodiment, even after the movement/rotation of the virtual viewpoint, matching between the marker input contents and the contents of the virtual viewpoint image can continuously be ensured. On the other hand, if the method according to this embodiment is not applied, the marker is kept displayed at the input position after the movement/rotation of the virtual viewpoint is performed, and only the contents of the virtual viewpoint image change. Hence, the marker input contents and the contents of the virtual viewpoint image do not match.

As described above, according to this embodiment, the marker input to the virtual viewpoint image is generated as a marker object on a plane easy for the viewer to place focus in the virtual space where the three-dimensional model of the captured object is arranged. Then, the marker object is rendered as a virtual viewpoint image together with the three-dimensional model of the captured object. This makes it possible to maintain the positional relationship between the captured object and the marker and eliminate or reduce discomfort caused by the deviation of the marker from the captured object when the virtual viewpoint is moved to an arbitrary position/posture.

### (Sharing of Marker Object)

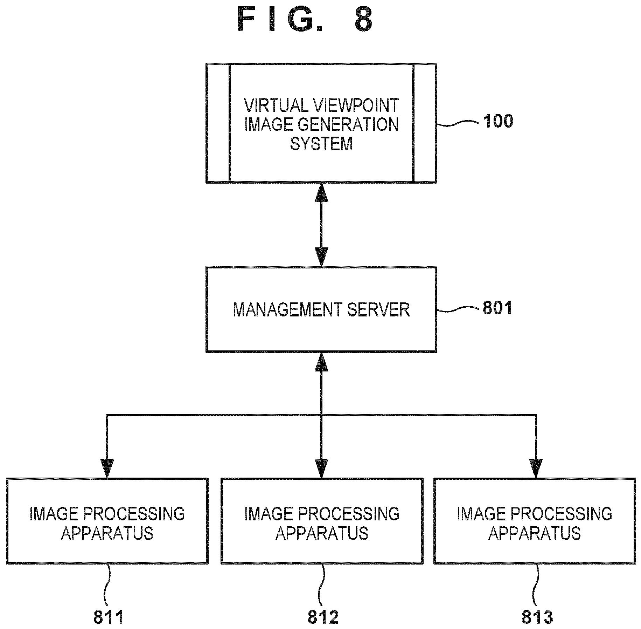

Note that the marker object generated by the above-described method can be shared by another device. Fig. 8 shows an example of the configuration of a system that performs such sharing. Referring to Fig. 8, the virtual viewpoint image generation system 100 is configured to execute at least some of the functions described concerning Fig. 1A, and performs capturing of an object and generation of a multi-viewpoint image or a three-dimensional model. A management server 801 is a storage device configured to manage and store a three-dimensional model of a captured object or a shared marker object (to be described later) on a timecode basis, and can also be a distribution apparatus configured to distribute a marker object on a timecode basis. Each of image processing apparatuses 811 to 813 has the same functions as, for example, the image processing apparatus 104, obtains a three-dimensional model from the management server 801, and generates and displays a virtual viewpoint image. Also, each of the image processing apparatuses 811 to 813 can accept marker input from the user, generate a marker object, and upload the generated marker object to the management server 801 to cause it to store. A first image processing apparatus downloads a marker object uploaded by a second image processing apparatus, thereby generating a virtual viewpoint image by combining the marker input by the user of the second image processing apparatus and the three-dimensional model of the object.

### (Data Configuration of Marker Object)

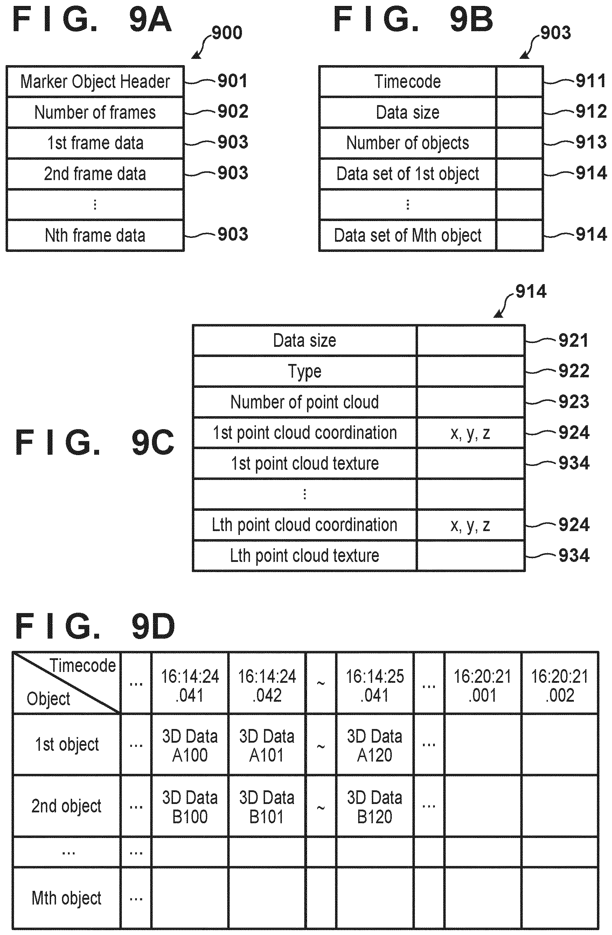

In an example, the image processing apparatus 104 holds, by the marker management unit 205, a marker object in the configurations shown in Figs. 9A to 9C. The image processing apparatus 104 can, for example, upload the data of the marker object to the management server 801 while keeping the same data configuration. Also, the image processing apparatus 104 downloads the data of a marker object of the same data configuration from the management server 801. Note that the data configurations shown in Figs. 9A to 9C are merely examples, and data of an arbitrary format capable of specifying the position and shape of the marker object in the virtual space can be used. The management server 801 and the image processing apparatus 104 may use different data formats, and data of a marker object may be reproduced as needed in accordance with a predetermined rule.

Fig. 9A shows an example of the configuration of data 900 of a marker object. A header 901 at the top of the data set stores an object type. For example, information representing that this data set is a data set of "marker" is stored in the header 901. Note that "foreground", "background", or the like may be designated as the type of data set. Also, the data 900 of the marker object includes a frame count 902, and one or more data 903 corresponding to one or more frames (timecodes).

The data 903 of each frame (timecode) has, for example, a configuration as shown in Fig. 9B. The data 903 includes, for example, a timecode 911 and a data size 912. Note that the data size 912 enables to specify the boundary between the data of the frame (timecode) and the data of the next frame. A data size concerning each of a plurality of frames may be prepared outside the data 903. In this case, the information of the data size can be stored, for example, between the header 901 and the frame count 902, between the frame count 902 and the data 903, or after the data 903. The data 903 further stores a marker object count 913. The marker object count 913 represents the number of markers included in the timecode. For example, in the example shown in Fig. 7B, two markers including the circle 711 and the curve 712 are input. Hence, in this case, the marker object count 913 indicates that two marker objects exist. The data 903 includes data 914 of marker objects as many as the number indicated by the marker object count 913.

The data 914 of each marker object has, for example, a configuration as shown in Fig. 9C. The data 914 of each marker object includes a data size 921 and a data type 922. The data size 921 represents the size of each of the one or more data 914, and is used to specify the boundary of the data of each marker object. The data type 922 represents the type of the shape of a three-dimensional model. The data type 922 designates, for example, information such as "point group" or "mesh". Note that the shapes of three-dimensional models are not limited to these. As an example, if information representing "point group" is stored in the data type 922, the data 914 includes, after that, a point group count 923, and one or more combinations of coordinates 924 and textures 934 of all point groups. Note that each of the one or more data 914 may include not only the three-dimensional data of a marker object but also the center coordinates of all point group coordinates or the minimum and maximum values on each of the three-dimensional axes (not shown). Also, each of the one or more data 914 may include still another data. Note that the data of the marker object need not always be prepared on a frame basis, and may be configured as an animation in a format like, for example, a scene graph.

When data as shown in Figs. 9A to 9C is used, for example, a plurality of marker objects for different timecodes in one game of a sport can be managed. Also, a plurality of markers can be managed in correspondence with one timecode.

Marker object management by the management server 801 will be described next. Fig. 9D shows an example of the configuration of a table configured to manage marker objects. Timecodes are plotted along the abscissa, and information representing a marker object corresponding to each timecode is stored along the ordinate. For example, in the cells of a row corresponding to "1st obj ect", data of "1st obj ect" shown in the data 903 of a plurality of timecodes (frames) are stored. For example, data shown in Fig. 9C is stored in one cell. When the table configuration of a data base shown as in Fig. 9D is used, if a marker object is designated, the management server 801 can obtain the data of all timecodes concerning the marker object. Also, when the range of a timecode is designated, the management server 801 can obtain the data of all marker objects included in the timecode. Note that these are merely examples, and the data configuration and the management method as described above need not always be used if a marker object can be managed and shared.

### (Sharing and Display of Marker Objects)

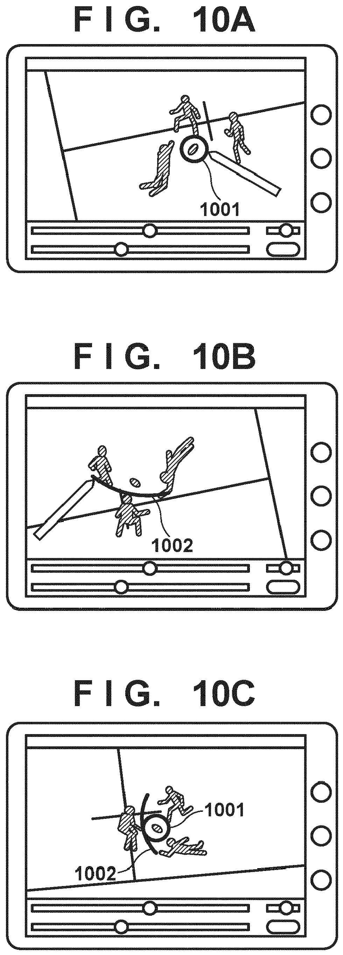

An example of sharing and display of marker objects will be described with reference to Figs. 10A to 10C. A case where marker objects are shared by the image processing apparatuses 811 to 813 shown in Fig. 8 will be described here. Note that here, Fig. 10A shows an operation screen displayed on the image processing apparatus 811, Fig. 10B shows an operation screen displayed on the image processing apparatus 812, and Fig. 10C shows an operation screen displayed on the image processing apparatus 813. As an example, as shown in Fig. 10A, assume that in the image processing apparatus 811, a marker having the shape of a circle 1001 is accepted for a virtual viewpoint image of certain timecode. For example, based on acceptance of a marker sharing instruction (not shown) by the user, the image processing apparatus 811 transmits, to the management server 801, the data of a marker object converted from the input marker in the above-described way. Also, as shown in Fig. 10B, assume that in the image processing apparatus 812, a marker having the shape of a curve 1002 is accepted for a virtual viewpoint image of the same timecode as in Fig. 10A. Based on acceptance of a marker sharing instruction (not shown) by the user, the image processing apparatus 812 transmits, to the management server 801, a marker object converted from the input marker in the above-described way. Note that the marker object is associated with the timecode and transmitted to be stored in the management server 801. For this purpose, the image processing apparatuses 811 to 813 have a storage control function for storing a timecode and a marker object in the management server 801 in association.

Assume that in this state, the image processing apparatus 813 accepts a marker updating instruction (not shown). In this case, concerning the timecode for which the markers are input in the image processing apparatuses 811 and 812, as shown in Figs. 10A and 10B, the image processing apparatus 813 obtains the marker objects corresponding to the timecode from the management server 801. Then, as shown in Fig. 10C, the image processing apparatus 813 generates a virtual viewpoint image using the three-dimensional models of captured objects and the obtained marker objects. Note that each marker object obtained here is three-dimensional data arranged in the same virtual space as the three-dimensional models of the captured objects, as described above. Hence, even on the image processing apparatus 813 of the sharing destination, the three-dimensional models of the captured objects and the marker objects are arranged in the same positional relationship as the positional relationship at the time of input in the image processing apparatuses 811 and 812 of the sharing sources. For this reason, even if the position of the virtual viewpoint and the line-of-sight direction are arbitrarily operated in the image processing apparatus 813, a virtual viewpoint image is generated while maintaining the positional relationship of these.

Note that, for example, upon accepting a marker updating instruction, the image processing apparatus 811 can obtain the information of the marker object of the marker (curve 1002) input in the image processing apparatus 812. Then, the image processing apparatus 811 can render a virtual viewpoint image including the obtained marker object in addition to the marker object of the marker (circle 1001) input in the self-apparatus and the three-dimensional models of the captured obj ects.

Note that, for example, if the image processing apparatus 813 accepts a marker updating instruction, marker objects managed in the management server 801 may be displayed in a list of thumbnails or the like, and a marker object to be downloaded may be selected. In this case, if the number of marker objects managed in the management server 801 is large, marker objects near the timecode at which the updating instruction has been accepted may be given higher priorities and displayed in a list of thumbnails or the like. That is, at the time of acceptance of the marker updating instruction in the image processing apparatus 813, to facilitate selection of the marker input near the timecode corresponding to the time, the marker can preferentially be displayed. In addition, the number of times of acceptance of download instructions may be managed for each marker object, and marker objects of larger counts may be given higher priorities and displayed in a list of thumbnails or the like. Note that a thumbnail with high display priority may be displayed at a position close to the top of a list or may be displayed in a large size.

In the above-described way, a marker input to a virtual viewpoint image can be shared by a plurality of devices while maintaining the positional relationship between the captured object and the marker. At this time, the marker has the format of the three-dimensional object on the virtual space, as described above. Hence, even if the position of the virtual viewpoint or the line-of-sight direction changes between the apparatus of the sharing source and the apparatus of the sharing destination, the virtual viewpoint image can be generated while maintaining the positional relationship between the captured object and the marker.

### (Control of Degree of Transparency of Marker According to Timecode)

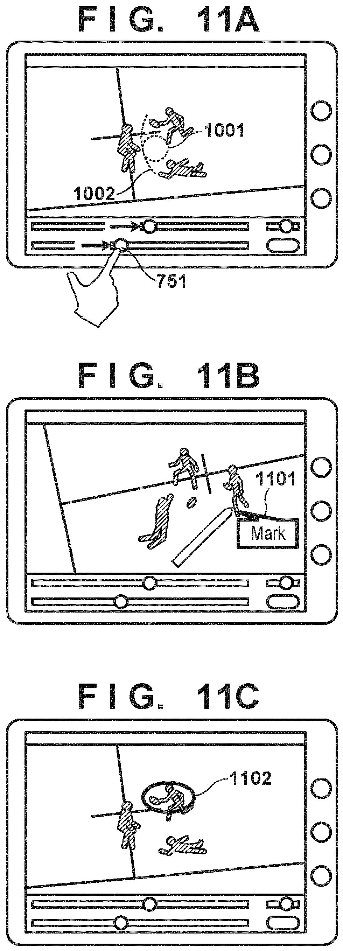

The positional relationship between the captured object and the marker object displayed in the above-described way changes if the captured object moves along with the elapse of time. In this case, if the marker object is kept displayed, the user may be uncomfortable. To avoid this, along with the elapse of time from the timecode of input of the marker object, the degree of transparency of the marker object is increased, thereby showing the user the change from the original point of interest and reducing discomfort. As described above, the marker object is held in association with the timecode. Here, assume that in the example shown in Fig. 10C, the user executes an operation 751 for the timecode. In this case, as shown in Fig. 11A, the image processing apparatus 813 can change the degree of transparency (α value) of the marker along with transitions from the timecode of generation of the marker object to a separate timecode. Accordingly, rendering is performed such that the marker is displayed in a lighter color along with the deviation from the actual marker input timing becomes large. This can reduce the discomfort of the user. Note that if the user returns the timecode, control for returning to the original degree of transparency may be performed, as shown in Fig. 10C. Note that the marker object may be rendered even in a virtual viewpoint image corresponding to a timecode before the timecode of generation of the marker object. In this case as well, control can be performed to increase the degree of transparency (display the marker object in a light color) if the difference between the timecode of generation of the marker object and the timecode of the virtual viewpoint image to be rendered is large. In addition, control may be performed such that the degree of transparency before the timecode of generation of the marker object becomes higher than the degree of transparency after the timecode of generation of the marker object (such that the marker object is displayed in a light color).

Note that in the above-described example, an example in which the degree of transparency changes along with the transition of the timecode has been described. However, the present invention is not limited to this. For example, control may be performed to display the marker in a light color by changing at least one of the brightness, color saturation, and chromaticity of the marker object.

### (Marker Object Control According to Coordinates of Three-Dimensional Model)

In addition to or in place of the above-described embodiment, the image processing apparatus may accept an operation of adding a marker to the three-dimensional model of the foreground. For example, as shown in Fig. 11B, a marker addition instruction 1101 is accepted for the three-dimensional model of the foreground (person). In this case, for example, as shown in Fig. 11C, the image processing apparatus generates a circular marker object 1102 having a radius of a predetermined size with respect to X- and Y-coordinates on the plane of interest of the three-dimensional model as the center. Accordingly, the same marker object as the marker object described with reference to Figs. 5A to 5E can be generated. Note that the shape of the marker object generated in a case where the marker object addition instruction (marker addition) to the three-dimensional model of the foreground is accepted is not limited to a circle. The shape of the marker object in this case may be a rectangle or the like, or may be another shape with which the three-dimensional model can receive attention.

Note that the position of the marker added to the three-dimensional model of the foreground may be changed along with movement of a person or ball on the foreground. Note that even in the marker object described with reference to Figs. 5A to 5E, the marker object may be associated with the position where the marker is added or the three-dimensional model of the foreground on the periphery, and the position of the marker object may be changed in accordance with the position of the three-dimensional model on the foreground. That is, independently of the method of adding a marker, the coordinates of the three-dimensional model of the foreground may be obtained for each timecode, and the coordinates of the marker object may be changed for each timecode. Accordingly, if the person or the like on the foreground moves along with the elapse of timecode, the marker object can be moved following the three-dimensional model. Alternatively, for example, the position of the marker object may be changed by the user operation in accordance with the change of the timecode. In this case, according to the user operation, the position of the marker object can be specified for each timecode, and the position can be stored/managed.

Note that in the above-described embodiment, processing in a case where a marker is added to a virtual viewpoint image based on multi-viewpoint images captured by a plurality of image capturing devices has been described. However, the present invention is not limited to this. That is, for example, even if a marker is added to a virtual viewpoint image generated based on a three-dimensional virtual space that is wholly artificially created on a computer, the marker may be converted into a three-dimensional object in the virtual space. Also in the above-described embodiment, an example in which a marker object associated with a timecode corresponding to a virtual viewpoint image with a marker is generated and stored has been described. However, the timecode need not always be associated with the marker object. For example, if the virtual viewpoint image is a still image, or if the virtual viewpoint image is used for a purpose of only temporarily adding a marker in a conference or the like, the marker object may be displayed or erased by, for example, a user operation independently of the timecode. Also, at least some of image processing apparatuses used in, for example, a conference system or the like need not have the capability of designating a virtual viewpoint. That is, after a marker is added to a virtual viewpoint image, only a specific user such as the facilitator of a conference needs to be able to designate a virtual viewpoint. Image processing apparatuses held by other users need not accept the operation of the virtual viewpoint. In this case as well, since a marker object is rendered in accordance with the virtual viewpoint designated by the specific user, it is possible to prevent the relationship between the marker and the captured object of the virtual viewpoint image from becoming inconsistent.

### [Other Embodiments]

In the above-described embodiment, an example in which a marker object is displayed as additional information displayed on a virtual viewpoint image has been described. However, the additional information displayed on the virtual viewpoint image is not limited to this. For example, at least one of a marker, an icon, an avatar, an illustration, and the like designated by the user may be displayed as additional information on the virtual viewpoint image. A plurality of pieces of additional information may be prepared in advance, and an arbitrary one of these may be selected by the user and arranged on the virtual viewpoint image. The user may be able to drag an icon or the like in the touch panel display and arrange it at an arbitrary position. The arranged additional information such as an icon is converted into three-dimensional data by the same method as in the above-described embodiment. Note that the method is not limited to this, and additional information of two-dimensional data and additional information of three-dimensional data may be associated in advance, and at the timing of arranging additional information of two-dimensional data, the additional information may be converted into additional information of corresponding three-dimensional data. As described above, this embodiment can be applied to a case where various kinds of additional information are displayed on a virtual viewpoint image.

Also, in the above-described embodiment, additional information (marker object) is converted into three-dimensional data. The three-dimensional data at this time need not always be data representing a three-dimensional shape. That is, three-dimensional data is data having a three-dimensional position at least in a virtual space, and the shape of additional information may be a plane, a line, or a point.

In addition, all the functions described in the above embodiment need not be provided, and the embodiment can be executed by combining arbitrary functions.

Embodiments) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiments) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An image processing apparatus comprising:
obtaining means (214) for obtaining input of additional information to a two-dimensional virtual viewpoint image based on a virtual viewpoint and a three-dimensional virtual space;
conversion means (204) for converting the input additional information into an object arranged at a three-dimensional position in the virtual space; and
display control means (203) for displaying, on display means (215), the virtual viewpoint image based on the virtual space in which the object is arranged at the three-dimensional position.

2. The apparatus according to claim 1, wherein
the conversion means performs the conversion such that the object is generated on a predetermined plane in the virtual space.

3. The apparatus according to claim 2, wherein
the conversion means performs the conversion such that a point of the object corresponding to a point where the additional information is input is generated at an intersection, with respect to the predetermined plane, of a line passing through a virtual viewpoint corresponding to the virtual viewpoint image when the additional information is input and the point where the additional information is input.

4. The apparatus according to any one of claims 1 to 3, wherein
the display control means displays the virtual viewpoint image that does not include the object in a case where the object converted by the conversion means does not exist in a range of a field of view based on the virtual viewpoint, and displays the virtual viewpoint image including the object in a case where the object converted by the conversion means exists in the range.

5. The apparatus according to any one of claims 1 to 4, wherein
a timecode corresponding to the virtual viewpoint image when the additional information is input is associated with the object, and
in a case where the virtual viewpoint image corresponding to the timecode associated with the object is displayed, the display control means displays the virtual viewpoint image based on the virtual space in which the object is arranged.

6. The apparatus according to claim 5, further comprising
storage control means for storing, in storage means, the timecode and the object in association with each other.

7. The apparatus according to any one of claims 1 to 6, wherein
the display control means displays the virtual viewpoint image based on the virtual space in which another object based on another additional information input by another image processing apparatus is arranged at a three-dimensional position.

8. The apparatus according to any one of claims 1 to 7, wherein
the obtaining means obtains information representing the virtual viewpoint designated by a user.

9. The apparatus according to any one of claims 1 to 8, wherein
the display control means controls to display the object in a light color if a difference between a timecode corresponding to the virtual viewpoint image to which the additional information is input and a timecode of the virtual viewpoint image to be displayed is large.

10. The apparatus according to claim 9, wherein
the display control means controls to display the object in a light color by changing at least one of a degree of transparency, brightness, color saturation, and chromaticity of the object.

11. The apparatus according to any one of claims 1 to 10, further comprising specifying means for specifying a three-dimensional model of a specific object corresponding to a position where the additional information is added in the virtual viewpoint image,
wherein the display control means displays, at a three-dimensional position corresponding to the three-dimensional model of the specific object in the virtual space, the virtual viewpoint image on which the object corresponding to the additional information is arranged.

12. The apparatus according to any one of claims 1 to 11, wherein
the additional information includes at least one of a marker, an icon, an avatar, and an illustration.

13. The apparatus according to any one of claims 1 to 12, wherein
the virtual viewpoint image is generated based on multi-viewpoint images obtained by image capturing of a plurality of image capturing devices.

14. An image processing method executed by an image processing apparatus, comprising:
obtaining (S608) input of additional information to a two-dimensional virtual viewpoint image based on a virtual viewpoint and a three-dimensional virtual space;
converting (S609) the input additional information into an object arranged at a three-dimensional position in the virtual space; and
displaying (S611), on display means, the virtual viewpoint image based on the virtual space in which the object is arranged at the three-dimensional position.

15. A program configured to cause a computer to function as an image processing apparatus defined in any one of claims 1 to 13.
